# EUROPEAN PATENT SPECIFICATION

(11) **EP 3 492 309 B1**
(45) Date of publication and mention of the grant of the patent: **05.10.2022**
(21) Application number: 17852412.0
(22) Date of filing: 22.09.2017
(51) Int. Cl.: B60M 3/04

(54) **AUTOMATIC PASSING PHASE-SEPARATION SYSTEM FOR SECTION POST OF ELECTRIFIED RAILWAY, AND CONTROL METHOD THEREFOR**
AUTOMATISCHES DURCHFAHRTSPHASENTRENNSYSTEM FÜR EINEN ABSCHNITT EINER ELEKTRIFIZIERTEN TRASSE UND STEUERUNGSVERFAHREN DAFÜR
SYSTÈME DE SÉPARATION DE PHASE DE PASSAGE AUTOMATIQUE POUR POTEAU DE SECTION DE CHEMIN DE FER ÉLECTRIFIÉ ET SON PROCÉDÉ DE COMMANDE

(30) Priority: 23.09.2016 CN 201610844202
(43) Date of publication of application: 05.06.2019
(73) Proprietor: Southwest Jiaotong University, Sichuan 610031 (CN); LI, Qunzhan, Sichuan 610031 (CN)
(72) Inventor: LI, Qunzhan, Chengdu Sichuan 610031 (CN)
(74) Representative: Rupprecht, Kay
(86) International application number: PCT/CN2017/102830
(87) International publication number: WO 2018/054344

(56) References cited:
- CN-A- 103 625 309
- CN-A- 103 625 310
- CN-A- 105 034 856
- CN-A- 105 539 208
- CN-A- 105 799 553
- CN-A- 105 799 553
- CN-A- 105 835 727
- CN-A- 105 835 727
- CN-A- 106 183 897
- CN-U- 206 086 435
- JP-A- S60 191 834

## Description

### TECHNICAL FIELD

The present invention relates to the field of traction power supply for electrified railways, and in particular, to an automatic split phase crossing technology for electrified railway section posts.

### DESCRIPTION OF RELATED ART

For the electrified railways in China, single-phase power frequency alternating-current systems are generally adopted, and to equalize the three phases of loads for a power system as much as possible, a scheme of rotating phase sequence and phase-splitting section-division power supply is often used. Adjacent power supply intervals between the split-phase sections are divided by air or insulators, which is referred to as electrical phase splitting or phase splitting.

To prevent the electric locomotive lively passing the split phase from burning suspension components of an overhead line system due to arcing, and even causing phase-to-phase short circuits and other accidents, when the train crosses the split phase, a driver needs to manually degrade, turn off the auxiliary unit, cut off the main switch, and drive the train to pass through the split phase section with inertia, and then close the main switch, turn on the auxiliary unit, and upgrade to resume the power to complete the split phase crossing process, which is commonly known as pantograph-degraded split phase crossing. With the increase of train speed and frequent split phase crossing, the driver works hard or is unable to complete the split phase crossing due to late manual response, and measures must be taken. The main measures can be divided into an automatic split phase crossing technology and an in-phase power supply technology with split phase canceled. The in-phase power supply can fundamentally eliminate the phase splitting at the exit of the traction sub-station, so that the train can pass through without power interruption, however, the problem of split phase crossing for the section posts still needs to be solved when the power grid does not allow bi-lateral power supply. At present, there are two common ways of automatic split phase crossing, including on-board automatic split phase crossing and ground-switch automatic split phase crossing.

The on-board automatic split phase crossing simulates the driver manually crossing the split phase through a train control system on the train through the combination of the train and the ground signals. During the on-board automatic split phase crossing, the train has long power interruption time and large speed loss, meanwhile, there are risks such as power supply dead zones and stoppage, and the risks are larger when the train stops on a long and large slope section.

The current method of ground-switch automatic split phase crossing is to switch the voltages of power supply arms at two ends of the split phase to a neutral section through the ground switches in combination with the ground location signal of the train, where the switching action is not needed for the train, the power interruption time only includes the switching time of two sets of ground switches, which is generally as short as 200 ms-400 ms and has small effect on the speed loss of the train, and there is no power supply dead zone. However, despite the short switching time, this scheme is unavailable for the traction drive systems of some high-speed trains, which need to be restarted after split phase crossing, thereby affecting the performance of the train.

EP2016820671 discloses a kind of AC electrified railway intelligent neutral section device. It consists of a first switch which connects the first power supply arm to the neutral section and its parallel impedance, a second switch which connects the second power supply arm to the neutral section and its parallel impedance, current and voltage sensors detecting the first switch and current and voltage sensors detecting the second switch etc. The device can automatically identify the train's pantograph position through the voltage information at both ends of the first switch and the second switch and current information flowing from the first switch and the second switch, and automatically close or open the first switch and the close or open the second switch to make the neutral section obtain or cut off the electric energy of power supply arm according to the identified location of the pantograph. However, it does not restrict the switching time point of the first switch and the second switch, which may generate a transient process, easily causing over-voltage or over-current during operations, and even damaging components to result in a fault.

CN105835727A discloses a ground type non-contact automatic neutral-section passing device. The ground type non-contact automatic neutral-section passing device can be used for control and protection when an electric locomotive passes through an electrical neutral section. However, it only use the current zero-crossing switch of the SCR itself, does not actively restrict the switching time point of the switch.

In addition, whether it is the on-board automatic split phase crossing or the ground-switch automatic split phase crossing, the switch switching therein will generate a transient process, easily causing over-voltage or over-current during operations, and even damaging components to result in a fault.

By virtue of the characteristic that the two power supply arms at two sides of the section post supply power to the in-phase voltage, this application can promote the automatic split phase crossing technology to a new advanced level of uninterrupted power supply for the train. It applies to a variety of trains and can effectively suppress the transient electrical process as well as over-voltages and over-currents without adversely affecting the power grid.

### SUMMARY

An objective of the present invention is to provide an automatic split phase crossing system for electrified railway section posts, which can effectively solve the problem on automatic split phase crossing in the event of uninterrupted power supply by electrified railway section posts.

Another objective of the present invention is to provide a control method for an automatic split phase crossing system for electrified railways, which can effectively solve the problem on the control over the uninterrupted power supply to the automatic split phase crossing system by the electrified railway section posts.

These objectives are achieved by the appended claims.

The present invention employs a technical solution as follows: an automatic split phase crossing system for electrified railway section posts comprises: a normally-closed thyristor switch 1 (T1) and thyristor switch 2 (T2), a normally-open load switch 1 (K1) and load switch 2 (K2), a normally-broken spare switch 1 (K11) and spare switch 2 (K22), a resistor 1 (R1) and a resistor 2 (R2), a current transformer 1 (H1) and a current transformer 2 (H2) as well as a voltage transformer (V); a power supply arm is divided into a power supply arm 1 (A1) and a power supply arm 2 (A2), the power supply arm 1 (A1) is connected to one end of a neutral section (A0) through a sectionalizer 1 (S1), and the power supply arm 2 (A2) is connected to the other end of the neutral section (A0) through a sectionalizer 2 (S2); a post at an end segment of the power supply arm 1 (A1) close to the sectionalizer 1 (S1) is equipped with a pantograph identifier 1 (P1), a post provided with the sectionalizer 1 (S1) is equipped with a pantograph identifier 2 (P2), and a post provided with the sectionalizer 2 (S2) is equipped with a pantograph identifier 3 (P3); the load switch 1 (K1), the thyristor switch 1 (T1) and the current transformer 1 (H1) are sequentially connected in series and then connected to two ends of the sectionalizer 1 (S1) in parallel, and the resistor 1 (R1) and the spare switch 1 (K11) are also connected to two ends of the sectionalizer 1 (S1) in parallel, respectively; the load switch 2 (K2), the thyristor switch 2 (T2) and the current transformer 2 (H2) are sequentially connected in series and then connected to two ends of the sectionalizer 2 (S2) in parallel, and the resistor 2 (R2) and the spare switch 2 (K22) are also connected to two ends of the sectionalizer 2 (S2) in parallel, respectively; a voltage transformer (V) is connected between a connection of the power supply arm 1 (A1) and the sectionalizer 1 (S1) and rail ground in parallel; the signal ends of the pantograph identifier 1 (PI), the pantograph identifier 2 (P2), the pantograph identifier 3 (P3), the output ends of the current transformer 1 (H1) and the current transformer 2 (H2) as well as the output end of the voltage transformer (V) are connected to a control unit (CU); and the triggering ends of the thyristor switch 1 (T1) and the thyristor switch 2 (T2), the operating ends of the load switch 1 (K1) and the load switch 2 (K2), and the operating ends of the spare switch 1 (K11) and the spare switch 2 (K22) are connected to the control unit (CU).

A remote device (YD) can also be connected to the control unit (CU).

The present invention is implemented through the technical solution as follows: a method for controlling an automatic split phase crossing system for electrified railway section posts comprises the following: when a train enters a neutral section (A0) via a sectionalizer 1 (S1), a thyristor switch 1 (T1) is turned off, a thyristor switch 2 (T2) is commanded to be turned on immediately after the thyristor switch 1 (T1) is turned off during current zero-crossing to complete the instantaneous switching at a current zero-crossing point from a power supply arm 1 (A1) to a power supply arm 2 (A2), that is, a neutral section (A0) is disconnected from the power supply arm 1 (A1) and directly connected to a power supply arm 2 (A2), enabling uninterrupted power supply. Furthermore, a resistor 1 (R1) and a resistor 2 (R2) work independently or in combination to suppress an equalizing current and reduce the interference to a power grid to a minimum permissible extent, and meanwhile, to suppress a transient process. A control sequence is specifically as follows:

A. an initial system state, where there is no train at the neutral section (A0); and the signal ends of a pantograph identifier 1 (PI), a pantograph identifier 2 (P2) and a pantograph identifier 3 (P3) have an output signal of 0;

B. if the signal end of the pantograph identifier 1 (P1) has an output signal of 1, that is, when the pantograph identifier 1 (P1) senses that the train (L) travels from the power supply arm 1 (A1) to the sectionalizer 1 (S1), the control unit (CU) selects the output waveform of the voltage transformer (V) to undergo voltage zero-crossing, and immediately commands the thyristor switch 1 (T1) to be turned on to allow the neutral section (A0) to be directly connected to the power supply arm 1 (A1); and at this point, the resistor 1 (R1) is shorted and the resistor 2 (R2) works;

C. if the signal end of the pantograph identifier 2 (P2) has an output signal of 1, that is, when the train (L) enters the neutral section (A0) from the power supply arm 1 (A1) via the sectionalizer 1 (S1), the control unit (CU) commands the thyristor switch 1 (T1) to be turned off, and commands the thyristor switch 2 (T2) to be turned on immediately after the thyristor switch 1 (T1) is turned off during current zero-crossing, that is, the neutral section (A0) is blocked from the power supply arm 1 (A1) but is directly connected to the power supply arm 2 (A2); and at this point, the resistor 1 (R1) returns to work and the resistor 2 (R2) is shorted; and

D. if the signal end of the pantograph identifier 3 (P3) has an output signal of 1, that is, when the train enters the power supply arm 2 (A2) from the neutral section (A0) via the sectionalizer 2 (S2), the control unit (CU) commands the thyristor switch 2 (T2) to be turned off, that is, the neutral section (A0) is blocked from the power supply arm 2 (A2); at this point, the resistor 2 (R2) returns to work; that is, the signal ends of the pantograph identifier 1 (PI), the pantograph identifier 2 (P2) and the pantograph identifier 3 (P3) reset to 0, and the system returns to the initial state A, thereby completing the uninterrupted power supply switching from the power supply arm 1 (A1) to the power supply arm 2 (A2).

Both the thyristor switch 1 (T1) and the thyristor switch 2 (T2) are bidirectional thyristor alternating-current switches.

Both the resistor 1 (R1) and the resistor 2 (R2) are high-voltage high-resistance resistors and have a nominal voltage reaching 27.5 kV to the ground, and voltages of more than or equal to 10 kV at two ends, with a resistance value of more than or equal to 500 Ω; and the resistor 1 (R1) and the resistor 2 (R2) work independently or in combination to suppress the equalizing current and the transient process.

When the currents detected by the output ends of the current transformer 1 (H1) and the current transformer 2 (H2) are more than 0 at the same time, that is, the thyristor switch 1 (T1) and the thyristor switch 2 (T2) are turned on simultaneously, which is considered to be a failure (which is reported as a failure alarm by a remote device (YD)), the control unit (CU) commands the load switch 1 (K1) and the load switch 2 (K2) to be broken, cuts off the thyristor switch 1 (T1) and the thyristor 2 (T2) and then commands the spare switch 1 (K11) and the spare switch 2 (K22) to execute an automatic split phase crossing operation in place of the thyristor switch 1 (T1) and the thyristor switch 2 (T2), respectively, with a control method the same as that of the traditional automatic ground split phase crossing.

Apparently, the control unit (CU) can also collect the on-off information of the load switch 1 (K1) and the load switch 2 (K2), the thyristor switch 1 (T1) and the thyristor switch 2 (T2), as well as the spare switch 1 (K11) and the spare switch 2 (K22), and further analyze the working states of such to find faults in time.

For the convenience of overhaul, it is a general rule that the branch of the resistor 1 (R1) and the resistor 2 (R2) should be connected to an isolation switch in series; the system can still operate when the resistor 1 (R1) and the resistor 2 (R2) quit, however, when the thyristor 1 (T1) and the thyristor 2 (T2) mismatches, a larger transient process or equalizing current may be caused.

To match with the triggered conduction of the thyristor and enhance the damping property to the transient process, a set of high-voltage high-resistance resistors can be connected between the neutral section (A0) and the rail ground in parallel.

The present invention is based on the following working principle: two power supply arms at two sides of a section post are powered with the voltage or linear voltage of the same phase from a three-phase power grid; with respect to a 50 Hz power frequency circuit, the time for turning on and off the electronic power switches such as the thyristors is very short, which is negligible, that is, the thyristor switches are considered to be turned on and off instantly. Voltage surges can be reduced effectively by triggering the thyristor switches during voltage zero-crossing to turn on the thyristor switches for shorting the resistors. After the thyristor switch 1 is turned off during current zero-crossing, the thyristor switch 2 is immediately commanded to be turned on to complete the instantaneous switching at the current zero-crossing point from the power supply arm 1 to the power supply arm 2, that is, the power supply to the train is transiently switched to the power supply arm 2, enabling uninterrupted power supply. The high-voltage high-resistance resistors 1 and 2 connected to the system in series work either independently or in combination to suppress the equalizing current and reduce the interference to the power grid to the minimum permissible extent, and meanwhile to exert a damping effect to suppress the transient process and over-voltage or over-current possibly caused by the traction power supply system.

Compared with the prior art, the present invention has the following advantageous effects.

I. The present invention immediately turns on the thyristor switch 2 after the thyristor switch 1 is turned off during current zero-crossing, completing the instantaneous switching at the current zero-crossing point from the power supply arm 1 to the power supply arm 2, and enabling uninterrupted power supply for the train, that is, the switching time is 0 and applies to all kinds of trains, and the switching time for the current ground-switch automatic split phase crossing is mostly 200ms to 400ms, which is unavailable for the traction drive system of some models of high-speed trains, which need to be restarted after split phase crossing, affecting the performance of the train.

II. During the switching, the resistors 1 and 2 connected to the system in series work either independently or in combination to suppress the equalizing current and reduce the interference to the power grid to the minimum permissible extent, and meanwhile to exert a damping effect to suppress the transient process and over-voltage or over-current possibly caused by the traction power supply system.

III. The present invention has a system fault identification and switching function, which can avoid accident escalation.

IV. The present invention is advanced in terms of technology, superior in terms of performance and easy to implement.

### BRIEF DESCRIPTION OF DRAWINGS

FIG. 1 is a schematic view of a structure according to an embodiment of the present invention.
FIG. 2 is a schematic view of a control unit according to an embodiment of the present invention.

### DETAILED DESCRIPTION OF THE INVENTION

The present invention will be further described in details below in conjunction with the accompanying drawings and particular embodiments.

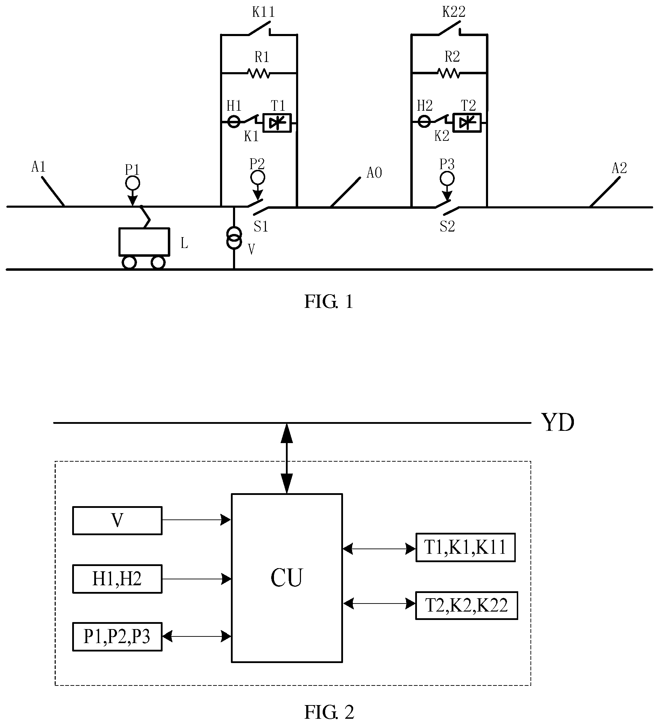

FIG. 1 shows a particular implementation of the present invention, where an automatic split phase crossing system for electrified railway section posts comprises: a power supply arm 1 (A1), a neutral section (A0) and a power supply arm 2 (A2); the power supply arm 1 (A1) is connected to one end of a neutral section (A0) through a sectionalizer 1 (S1), and the power supply arm 2 (A2) is connected to the other end of the neutral section (A0) through a sectionalizer 2 (S2); a post at an end segment of the power supply arm 1 (A1) close to the sectionalizer 1 (S1) is equipped with a pantograph identifier 1 (PI), a post provided with the sectionalizer 1 (S1) is equipped with a pantograph identifier 2 (P2), and a post provided with the sectionalizer 2 (S2) is equipped with a pantograph identifier 3 (P3); the load switch 1 (K1), the thyristor switch 1 (T1) and the current transformer 1 (H1) are sequentially connected in series and then connected to two ends of the sectionalizer 1 (S1) in parallel, and the resistor 1 (R1) and the spare switch 1 (K11) are also connected to two ends of the sectionalizer 1 (S1) in parallel, respectively; the load switch 2 (K2), the thyristor switch 2 (T2) and the current transformer 2 (H2) are sequentially connected in series and then connected to two ends of the sectionalizer 2 (S2) in parallel, and the resistor 2 (R2) and the spare switch 2 (K22) are also connected to two ends of the sectionalizer 2 (S2) in parallel, respectively; a voltage transformer (V) is connected between a connection of the power supply arm 1 (A1) and the sectionalizer 1 (S1) and rail ground in parallel to measure a voltage to the ground; the signal ends of the pantograph identifier 1 (P1), the pantograph identifier 2 (P2), the pantograph identifier 3 (P3), the output ends of the current transformer 1 (H1) and the current transformer 2 (H2) as well as the output end of the voltage transformer (V) are connected to a control unit (CU); the triggering ends of the thyristor switch 1 (T1) and the thyristor switch 2 (T2), the operating ends of the load switch 1 (K1) and the load switch 2 (K2), and the operating ends of the spare switch 1 (K11) and the spare switch 2 (K22) are connected to the control unit (CU); and the remote device (YD) can also be connected to the control unit (CU).

Both the thyristor 1 (T1) and the thyristor 2 (T2) are bi-directional thyristor alternating-current switches and normally open; the load switch 1 (K1) and the load switch 2 (K2) are normally closed; and the spare switch 1 (K11) and the spare switch 2 (K22) are normally broken.

Both the resistor 1 (R1) and the resistor 2 (R2) are high-voltage high-resistance resistors and have a nominal voltage reaching 27.5 kV to the ground, and voltages of more than or equal to 10 kV at two ends, with a resistance value of generally more than or equal to 500 Ω; and the resistor 1 (R1) and the resistor 2 (R2) work either independently or in combination to suppress the equalizing current and the transient process. For the convenience of overhaul, it is a general rule that the branch of the resistor 1 (R1) and the resistor 2 (R2) should be connected to an isolator switch in series; the system can still operate when the resistor 1 (R1) and the resistor 2 (R2) quit, however, when the thyristor 1 (T1) and the thyristor 2 (T2) mismatches, a larger transient process or equalizing current may be caused.

The voltage transformer (V) is used for detecting the voltage of the power supply arms, and when the resistor 1 (R1) and the resistor 2 (R2) work, according to the invention, the voltage transformer (V) is disposed on the power supply arm 1 (A1) or according to examples not belonging to the invention, the voltage transformer (V) can be disposed at a proper position on the neutral section (A0) or the power supply arm 2 (A2) since the power supply arm 1 (A1) is at the same phase with the neutral section (A0) and the power supply arm 2 (A2).

To match with the triggered conduction of the thyristor and enhance the damping property to the transient process, a set of high-voltage high-resistance resistors can be connected between the neutral section (A0) and the rail ground in parallel.

A control sequence to allow the automatic split phase crossing system for the electrified railway section posts to perform the automatic split phase crossing is as follows:

A. an initial system state, where there is no train at the neutral section (A0); and the signal ends of a pantograph identifier 1 (PI), a pantograph identifier 2 (P2) and a pantograph identifier 3 (P3) have an output signal of 0;

B. if the signal end of the pantograph identifier 1 (P1) has an output signal of 1, that is, when the pantograph identifier 1 (P1) senses that the train (L) travels from the power supply arm 1 (A1) to the sectionalizer 1 (S1), the control unit (CU) commands the thyristor switch 1 (T1) to be turned on to allow the neutral section (A0) to be directly connected with the power supply arm 1 (A1), when selecting the output waveform of the voltage transformer (V) to undergo voltage zero-crossing; and at this point, the resistor 1 (R1) is shorted and the resistor 2 (R2) works;

C. if the signal end of the pantograph identifier 2 (P2) has an output signal of 1, that is, when the train (L) enters the neutral section (A0) from the power supply arm 1 (A1) via the sectionalizer 1 (S1), the control unit (CU) commands the thyristor switch 1 (T1) to be turned off, and commands the thyristor switch 2 (T2) to be turned on immediately after the thyristor switch 1 (T1) is turned off during current zero-crossing, that is, the neutral section (A0) is blocked from the power supply arm 1 (A1) but directly connected to the power supply arm 2 (A2), and at this point, the resistor 1 (R1) returns to work and the resistor 2 (R2) is shorted; and

D. if the signal end of the pantograph identifier 3 (P3) has an output signal of 1, that is, when the train enters the power supply arm 2 (A2) from the neutral section (A0) via the sectionalizer 2 (S2), the control unit (CU) commands the thyristor switch 2 (T2) to be turned off, that is, the neutral section (A0) is blocked from the power supply arm 2 (A2); at this point, the resistor 2 (R2) returns to work; that is, the signal ends of the pantograph identifier 1 (PI), the pantograph identifier 2 (P2) and the pantograph identifier 3 (P3) are commanded to reset to 0, and the system returns to the initial state A, thereby completing the uninterrupted power supply switching from the power supply arm 1 (A1) to the power supply arm 2 (A2).

The example shown in the drawings assumes that a train is traveling from left to right, the steps for automatic split phase crossing can be completed similarly when the train is traveling from right to left, and a detailed description will be omitted here.

FIG. 2 shows a schematic view of a control unit according to an embodiment of the present invention. The signal ends of the pantograph identifier 1 (PI), the pantograph identifier 2 (P2) and the pantograph identifier 3 (P3), the output ends of the current transformer 1 (H1) and the current transformer 2 (H2), the output end of the voltage transformer (V), the triggering ends of the thyristor switch 1 (T1) and the thyristor switch 2 (T2), the operating ends of the load switch 1 (K1) and the load switch 2 (K2), as well as the operating ends of the spare switch 1 (K11) and the spare switch 2 (K22) are all connected to the control unit (CU); and the remote device (YD) can also be connected to the control unit (CU).

The pantograph identifier 1 (PI), the pantograph identifier 2 (P2) and the pantograph identifier 3 (P3) output detection signals to the control unit (CU) via signal ends, the control unit (CU) determines the position where the train is at the power supply arm 1 (A1), the neutral section (A0) and the power supply arm 2 (A2) based thereon, sends a command for turning on or off the thyristor switch 1 (T1) and the thyristor switch 2 (T2) to complete the instantaneous switching at the current zero-crossing point from the power supply arm 1 to the power supply arm 2 and enable the interrupted power supply to the train, and then commands the signal ends of the pantograph identifier 1 (PI), the pantograph identifier 2 (P2) and the pantograph identifier 3 (P3) to output signals reset to 0, and the system returns to the initial state.

When the currents detected by the output ends of the current transformer 1 (H1) and the current transformer 2 (H2) are more than 0 at the same time, that is, the thyristor switch 1 (T1) and the thyristor switch 2 (T2) are judged to be turned on simultaneously, which is considered to be a failure, the control unit (CU) commands the load switch 1 (K1) and the load switch 2 (K2) to be broken, cuts off the thyristor switch 1 (T1) and the thyristor 2 (T2) and then commands the spare switch 1 (K11) and the spare switch 2 (K22) to execute an automatic split phase crossing operation in place of the thyristor switch 1 (T1) and the thyristor switch 2 (T2), respectively, which is the same as that of the current ground-switch automatic split phase crossing method, where in combination with the output signals of the pantograph identifiers, the power supply arm 1 (A1) and the power supply arm 2 (A2) are sequentially switched to the neutral section through the spare switch 1 (K11) and the spare switch 2 (K22), acting as a backup to realize the automatic split phase crossing.

Apparently, the control unit (CU) can also collect the on-off information of the load switch 1 (K1) and the load switch 2 (K2), the thyristor switch 1 (T1) and the thyristor switch 2 (T2), as well as the spare switch 1 (K11) and the spare switch 2 (K22), and further analyze the working states of the same to find faults in time.

In addition, the remote device (YD) obtains information through the control unit (CU) and issues a command.

## Claims

1. An automatic split phase crossing system for electrified railway section posts, comprising:
pantograph identifiers (P1, P2, P3) for sensing a traveling position and direction of a train (L);
a voltage transformer (V) for detecting voltage of a first power supply arm (A1);
a first resistor (R1) and a first thyristor switch (T1), which are connected to two ends of a first sectionalizer (S1) in parallel respectively, wherein the first sectionalizer (S1) is between the first power supply arm (A1) and a neutral section (A0);
a second resistor (R2) and a second thyristor switch (T2), which are connected to two ends of a second sectionalizer (S2) in parallel respectively, wherein the second sectionalizer (S2) is between the neutral section (A0) and a second power supply arm (A2); and
a control unit (CU) for executing the following operations:
in the event that the train (L) travels from the first power supply arm (A1) to the first sectionalizer (S1), controlling the first thyristor switch (T1) to be turned on during voltage zero-crossing of the first power supply arm (A1);
in the event that the train (L) travels from the first power supply arm (A1) into the neutral section (A0) via the first sectionalizer (S1), controlling the first thyristor switch (T1) to be turned off with current zero-crossing of the first thyristor switch (T1) for the time being, and simultaneously controlling the second thyristor switch (T2) to be turned on; and
in the event that the train (L) travels from the neutral section (A0) into the second power supply arm (A2) via the second sectionalizer (S2), controlling the second thyristor switch (T2) to be turned off.

2. The automatic split phase crossing system for the electrified railway section posts according to claim 1, **characterized in that** the first resistor (R1) and second resistor (R2) have a nominal voltage reaching 27.5 kV to ground and have a voltage being more than or equal to 10 kV at two ends, with a resistance value of more than or equal to 500 Ω.

3. The automatic split phase crossing system for the electrified railway section posts according to claim 1 or 2, **characterized by** further comprising:
a first load switch (K1), a first current transformer (H1) and a first spare switch (K11), wherein the first load switch (K1) is connected to the first thyristor switch (T1) and the first current transformer (H1) in series, all of which form a serial loop connected at two ends of the first sectionalizer (S1), and the first spare switch (K11) is connected to two ends of the first sectionalizer (S1) in parallel; and
a second load switch (K2), a second current transformer (H2) and a second spare switch (K22), wherein the second load switch (K2) is connected to the second thyristor switch (T2) and the second current transformer (H2) in series, all of which form a series loop connected at two ends of the second sectionalizer (S2), and the second spare switch (K22) is connected to two ends of the second sectionalizer (S2) in parallel,
the control unit (CU) is further used for executing the following operations:
in the event that both the first current transformer (H1) and the second current transformer (H2) detect a current of more than 0, controlling the first load switch (K1) and second load switch (K2) to be turned off, and applying a control operation to be immediately applied to the first thyristor switch (T1) and second thyristor switch (T2), to the first spare switch (K11) and second spare switch (K22), respectively.

4. The automatic split phase crossing system for the electrified railway section posts according to claim 3, **characterized by** further comprising:
a remote device (YD),
wherein the control unit (CU) is further used for sending a fault alarm to the remote device (YD) in the event that both the first current transformer (H1) and the second current transformer (H2) detect a current of more than 0.

5. An automatic split phase crossing method for electrified railway section posts, wherein a first resistor (R1) and a first thyristor switch (T1) are connected to two ends of a first sectionalizer (S1) between a first power supply arm (A1) and a neutral section (A0) in parallel, respectively, and a second resistor (R2) and a second thyristor switch (T2) are connected to two ends of a second sectionalizer (S2) between the neutral section (A0) and a second power supply arm (A2),
the method comprises the steps of:
sensing a traveling position and direction of a train (L);
detecting a voltage of the first power supply arm (A1); and
in the event that the train (L) travels from the first power supply arm (A1) to the first sectionalizer (S1), controlling the first thyristor switch (T1) to be turned on during voltage zero-crossing of the first power supply arm (A1);
in the event that the train (L) travels from the first power supply arm (A1) into the neutral section (A0) via the first sectionalizer (S1), controlling the first thyristor switch (T1) to be turned off with current zero-crossing of the first thyristor switch (T1) for the time being, and simultaneously controlling the second thyristor switch (T2) to be turned on; and
in the event that the train (L) travels from the neutral section (A0) into the second power supply arm (A2) via the second sectionalizer (S2), controlling the second thyristor switch (T2) to be turned off.

6. The automatic split phase crossing method for the electrified railway section posts according to claim 5, **characterized in that** the first resistor (R1) and second resistor (R2) have a nominal voltage reaching 27.5 kV to ground and have a voltage being more than or equal to 10 kV at two ends, with a resistance value of more than or equal to 500 Ω.

7. The automatic split phase crossing method for the electrified railway section posts according to claim 5 or 6, **characterized by** further comprising the steps of:
in the event that both a first current transformer (H1) and a second current transformer (H2) detect a current of more than 0, controlling the first load switch (K1) and second load switch (K2) to be turned off, and applying a control operation to be immediately applied to the first thyristor switch (T1) and second thyristor switch (T2), to first spare switch (K11) and second spare switch (K22) respectively,
wherein the first thyristor switch (T1) is connected to the first current transformer (H1) and the first load switch (K1) in series, all of which form a series loop connected at two ends of the first sectionalizer (S1), and the first spare switch (K11) is connected to two ends of the first sectionalizer (S1) in parallel; and
the second thyristor switch (T2) is connected to the second current transformer (H2) and the second load switch (K2) in series, all of which form a series loop connected at two ends of the second sectionalizer (S2), and the second spare switch (K22) is connected to two ends of the second sectionalizer (S2) in parallel.

8. The automatic split phase crossing method for the electrified railway section posts according to claim 7, **characterized by** further comprising the step of:
sending a fault alarm to a remote device (YD) in the event that both the first current transformer (H1) and the second current transformer (H2) detect a current of more than 0.

## Patentansprüche

1. Automatisches Split-Phase-Durchfahrtssystem für Streckenmasten einer elektrifizierten Eisenbahnlinie, umfassend:
Scherenstromabnehmer-Identifikatoren (P1, P2, P3) zur Abtastung einer Fahrstellung und -richtung eines Zuges (L);
einen Spannungswandler (V) zur Erfassung einer Spannung eines ersten Stromversorgungszweiges (A1);
einen ersten Widerstand (R1) und einen ersten Thyristorschalter (T1), die jeweils mit zwei Enden eines ersten Streckenschalters (S1) parallel geschaltet sind, wobei der erste Streckenschalter (S1) sich zwischen dem ersten Stromversorgungszweig (A1) und einer Schutzstrecke (A0) befindet;
einen zweiten Widerstand (R2) und einen zweiten Thyristorschalter (T2), die jeweils mit zwei Enden eines zweiten Streckenschalters (S2) parallel geschaltet sind, wobei der zweite Streckenschalter (S2) sich zwischen der Schutzstrecke (A0) und einem zweiten Stromversorgungszweig (A2) befindet; und
eine Steuereinheit (CU) zur Ausführung der folgenden Operationen:
in dem Fall, dass der Zug (L) vom ersten Stromversorgungszweig (A1) zum ersten Streckenschalter (S1) fährt, Steuern, dass der erste Thyristorschalter (T1) bei spannungsloser Durchfahrt des ersten Stromversorgungszweiges (A1) eingeschaltet wird;
in dem Fall, dass der Zug (L) vom ersten Stromversorgungszweig (A1) in die Schutzstrecke (A0) über den ersten Streckenschalter (S1) fährt, Steuern, dass der erste Thyristorschalter (T1) bei stromloser Durchfahrt des ersten Thyristorschalters (T1) die bestehende Zeit lang abgeschaltet wird, und gleichzeitiges Steuern, dass der zweite Thyristorschalter (T2) eingeschaltet wird; und
in dem Fall, dass der Zug (L) von der Schutzstrecke (A0) in den zweiten Stromversorgungszweig (A2) über den zweiten Streckenschalter (S2) fährt, Steuern, dass der zweite Thyristorschalter (T2) abgeschaltet wird.

2. Automatisches Split-Phase-Durchfahrtssystem für die Streckenmasten einer elektrifizierten Eisenbahnlinie nach Anspruch 1, **dadurch gekennzeichnet, dass** der erste Widerstand (R1) und der zweite Widerstand (R2) eine 27,5 kV gegen Erde erreichende Nennspannung besitzen und eine Spannung aufweisen, die an zwei Enden eine Spannung mehr als oder gleich 10 kV bei einem Widerstandswert von mehr als oder gleich 500 Ω beträgt.

3. Automatisches Split-Phase-Durchfahrtssystem für die Streckenmasten einer elektrifizierten Eisenbahnlinie nach Anspruch 1 oder 2, **dadurch gekennzeichnet, dass** es des Weiteren umfasst:
einen ersten Lastschalter (K1), einen ersten Stromwandler (H1) und einen ersten Reserveschalter (K11), wobei der erste Lastschalter (K1) mit dem ersten Thyristorschalter (T1) und dem ersten Stromwandler (H1) in Reihe geschaltet ist, von denen alle einen an zwei Enden des ersten Streckenschalters (S1) angeschlossenen Stromkreis in Reihe bilden, und der erste Reserveschalter (K11) mit zwei Enden des ersten Streckenschalters (S1) parallel geschaltet ist; und
einen zweiten Lastschalter (K2), einen zweiten Stromwandler (H2) und einen zweiten Reserveschalter (K22), wobei der zweite Lastschalter (K2) mit dem zweiten Thyristorschalter (T2) und dem zweiten Stromwandler (H2) in Reihe geschaltet ist, von denen alle einen an zwei Enden des zweiten Streckenschalters (S2) angeschlossenen Stromkreis in Reihe bilden, und der zweite Reserveschalter (K22) mit zwei Enden des zweiten Streckenschalters (S2) parallel geschaltet ist, wobei
die Steuereinheit (CU) außerdem verwendet wird, um die folgenden Operationen durchzuführen:
in dem Fall, dass sowohl der erste Stromwandler (H1) als auch der zweite Stromwandler (H2) einen Strom von mehr als Null detektieren, Steuern, dass der erste Lastschalter (K1) und der zweite Lastschalter (K2) abgeschaltet werden, und Anwenden, dass ein Steuerungsvorgang unmittelbar jeweils an dem ersten Thyristorschalter (T1) und dem zweiten Thyristorschalter (T2), an dem ersten Reserveschalter (K11) und dem zweiten Reserveschalter (K22) angewandt wird.

4. Automatisches Split-Phase-Durchfahrtssystem für die Streckenmasten einer elektrifizierten Eisenbahnlinie nach Anspruch 3, **dadurch gekennzeichnet, dass** es des Weiteren umfasst:
ein Remotegerät (YD),
wobei die Steuereinheit (CU) ferner zum Senden eines Fehleralarmsignals an das Remotegerät (YD) in dem Fall verwendet wird, dass sowohl der erste Stromwandler (H1) als auch der zweite Stromwandler (H2) einen Strom von mehr als Null detektieren.

5. Automatisches Split-Phase-Durchfahrtsverfahren für Streckenmasten einer elektrifizierten Eisenbahnlinie, wobei
ein erster Widerstand (R1) und ein erster Thyristorschalter (T1) jeweils mit zwei Enden eines ersten Streckenschalters (S1) zwischen einem ersten Stromversorgungszweig (A1) und einer Schutzstrecke (A0) parallel geschaltet sind, und ein zweiter Widerstand (R2) und ein zweiter Thyristorschalter (T2) mit zwei Enden eines zweiten Streckenschalters (S2) zwischen der Schutzstrecke (A0) und einem zweiten Stromversorgungszweig (A2) verbunden sind,
wobei das Verfahren die folgenden Schritte umfasst:
Abtasten einer Fahrstellung und -richtung eines Zuges (L);
Detektieren einer Spannung des ersten Stromversorgungszweiges (A1); und
in dem Fall, dass der Zug (L) vom ersten Stromversorgungszweig (A1) zum ersten Streckenschalter (S1) fährt, Steuern, dass der erste Thyristorschalter (T1) bei spannungsloser Durchfahrt des ersten Stromversorgungszweiges (A1) eingeschaltet wird;
in dem Fall, dass der Zug (L) vom ersten Stromversorgungszweig (A1) in die Schutzstrecke (A0) über den ersten Streckenschalter (S1) fährt, Steuern, dass der erste Thyristorschalter (T1) bei stromloser Durchfahrt des ersten Thyristorschalters (T1) die bestehende Zeit lang abgeschaltet wird, und gleichzeitig Steuern, dass der zweite Thyristorschalter (T2) eingeschaltet wird; und
in dem Fall, dass der Zug (L) von der Schutzstrecke (A0) in den zweiten Stromversorgungszweig (A2) über den zweiten Streckenschalter (S2) fährt, Steuern, dass der zweite Thyristorschalter (T2) abgeschaltet wird.

6. Automatisches Split-Phase-Durchfahrtsverfahren für die Streckenmasten einer elektrifizierten Eisenbahnlinie nach Anspruch 5, **dadurch gekennzeichnet, dass** der erste Widerstand (R1) und der zweite Widerstand (R2) eine gegen Erde 27,5 kV erreichende Nennspannung besitzen und eine Spannung aufweisen, die an zwei Enden mehr als oder gleich 10 kV mit einem Widerstandswert von mehr als oder gleich 500 Ω beträgt.

7. Automatisches Split-Phase-Durchfahrtsverfahren für die Streckenmasten einer elektrifizierten Eisenbahnlinie nach Anspruch 5 oder 6, **dadurch gekennzeichnet, dass** es des Weiteren die folgenden Schritte umfasst:
in dem Fall, dass sowohl ein erster Stromwandler (H1) als auch ein zweiter Stromwandler (H2) einen Strom von mehr als Null detektieren, Steuern, dass der erste Lastschalter (K1) und zweite Lastschalter (K2) abgeschaltet werden, und Anwenden, dass ein Steuerungsvorgang jeweils unmittelbar auf den ersten Thyristorschalter (T1) und den zweiten Thyristorschalter (T2), auf den ersten Reserveschalter (K11) und den zweiten Reserveschalter (K22) angewandt wird,
wobei der erste Thyristorschalter (T1) mit dem ersten Stromwandler (H1) und dem ersten Lastschalter (K1) in Reihe geschaltet ist, von denen alle einen an zwei Enden des ersten Streckenschalters (S1) verbundenen Stromkreis in Reihe bilden, und der erste Reserveschalter (K11) mit zwei Enden des ersten Streckenschalters (S1) parallel geschaltet ist; und
der zweite Thyristorschalter (T2) mit dem zweiten Stromwandler (H2) und dem zweiten Lastschalter (K2) in Reihe geschaltet ist, von denen alle einen an zwei Enden des zweiten Streckenschalters (S2) verbundenen Stromkreis in Reihe bilden, und der zweite Reserveschalter (K22) mit zwei Enden des zweiten Streckenschalters (S2) parallel geschaltet ist.

8. Automatisches Split-Phase-Durchfahrtsverfahren für die Streckenmasten einer elektrifizierten Eisenbahnlinie nach Anspruch 7, **dadurch gekennzeichnet, dass** es des Weiteren die folgenden Schritte umfasst:
Senden eines Fehleralarmsignals an ein Remotegerät (YD) in dem Fall, dass sowohl der erste Stromwandler (H1) als auch der zweite Stromwandler (H2) einen Strom von mehr als Null detektieren.

## Revendications

1. Système de passage automatique de phase divisée pour les poteaux de sections de chemin de fer électrifié, comprenant :
des identificateurs de pantographe (P1, P2, P3) pour détecter la position et la direction de déplacement d'un train (L) ;
un transformateur de tension (V) pour détecter la tension d'un premier bras d'alimentation électrique (A1) ;
une première résistance (R1) et un premier commutateur à thyristor (T1), qui sont connectés respectivement à deux extrémités d'un premier sectionneur (S1) en parallèle, le premier sectionneur (S1) étant entre le premier bras d'alimentation électrique et une section neutre (A0) ;
une seconde résistance (R2) et un second commutateur à thyristor (T2), qui sont connectés respectivement à deux extrémités d'un second sectionneur (S2) en parallèle, le second sectionneur (S2) étant entre la section neutre (A0) et un second bras d'alimentation électrique (A2) ; et
une unité de commande (CU) pour exécuter les opérations suivantes :
dans le cas où le train (L) se déplace du premier bras d'alimentation électrique (A1) au premier sectionneur (S1), commander le premier commutateur à thyristor (T1) pour qu'il soit activé pendant le passage par zéro de la tension du premier bras d'alimentation électrique (A1) ;
dans le cas où le train (L) se déplace du premier bras d'alimentation électrique (A1) jusque dans la section neutre (A0) via le premier sectionneur (S1), commander le premier commutateur à thyristor (T1) pour qu'il soit désactivé avec le passage par zéro du courant du premier commutateur à thyristor (T1) pour le moment, et commander simultanément le second commutateur à thyristor (T2) pour qu'il soit activé ; et
dans le cas où le train (L) se déplace de la section neutre (A0) jusque dans le second bras d'alimentation électrique (A2) via le second sectionneur (S2), commander le second commutateur à thyristor (2) pour qu'il soit désactivé.

2. Système de passage automatique de phase divisée pour les poteaux de sections de chemin de fer électrifié selon la revendication 1,
**caractérisé en ce que** la première résistance (R1) et la seconde résistance (R2) ont une tension nominale atteignant 27,5 kV à la terre et ont une tension supérieure ou égale à 10 kV à deux extrémités, avec une valeur de résistance supérieure ou égale à 500 Ω.

3. Système de passage automatique de phase divisée pour les poteaux de sections de chemin de fer électrifié selon la revendication 1 ou 2, **caractérisé en ce qu'**il comprend en outre :
un premier commutateur de charge (K1), un premier transformateur de courant (H1) et un premier commutateur de rechange (K11), le premier commutateur de charge (K1) étant connecté au premier commutateur à thyristor (T1) et au premier transformateur de courant (H1) en série, qui forment tous une boucle série connectée à deux extrémités du premier sectionneur (S1), et le premier commutateur de rechange (K11) étant connecté à deux extrémités du premier sectionneur (S1) en parallèle ; et
un second commutateur de charge (K2), un second transformateur de courant (H2) et un second commutateur de rechange (K22), le second commutateur de charge (K2) étant connecté au second commutateur à thyristor (T2) et au second transformateur de courant (H2) en série, qui forment tous une boucle en série connectée aux deux extrémités du second sectionneur (S2), et le second commutateur de rechange (K22) étant connecté aux deux extrémités du second sectionneur (S2) en parallèle,
l'unité de commande (CU) étant en outre utilisée pour exécuter les opérations suivantes consistant à :
dans le cas où le premier transformateur de courant (H1) et le second transformateur de courant (H2) détectent tous deux un courant supérieur à 0, commander le premier commutateur de charge (K1) et le second commutateur de charge (K2) pour qu'ils soient désactivés, et appliquer une opération de commande à appliquer immédiatement au premier commutateur à thyristor (T1) et au second commutateur à thyristor (T2), au premier commutateur de rechange (K11) et au second commutateur de rechange (K22), respectivement.

4. Système de passage automatique de phase divisée pour les poteaux de sections de chemin de fer électrifié selon la revendication 3,
**caractérisé en ce qu'**il comprend en outre :
un dispositif distant (YD),
l'unité de commande (CU) étant en outre utilisée pour envoyer une alarme d'erreur au dispositif distant (YD) dans le cas où le premier transformateur de courant (H1) et le second transformateur de courant (H2) détectent tous les deux un courant supérieur à 0.

5. Procédé de passage automatique de phase divisée pour les poteaux de sections de chemin de fer électrifié, dans lequel
une première résistance (R1) et un premier commutateur à thyristor (T1) sont connectés respectivement à deux extrémités d'un premier sectionneur (S1) entre un premier bras d'alimentation électrique (A1) et une section neutre (A0) en parallèle, et une seconde résistance (R2) et un second commutateur à thyristor (T2) sont connectés à deux extrémités d'un second sectionneur (S2) entre la section neutre (A0) et un second bras d'alimentation électrique (A2),
le procédé comprend les étapes suivantes consistant à
détecter une position et une direction de déplacement d'un train (L) ;
détecter une tension du premier bras d'alimentation électrique (A1) ; et
dans le cas où le train (L) se déplace du premier bras d'alimentation électrique (A1) au premier sectionneur (S1), commander le premier commutateur à thyristor (T1) pour qu'il soit activé pendant le passage par zéro de la tension du premier bras d'alimentation électrique (A1) ;
dans le cas où le train (L) se déplace du premier bras d'alimentation électrique (A1) jusque dans la section neutre (A0) via le premier sectionneur (S1), commander le premier commutateur à thyristor (T1) pour qu'il soit désactivé avec le passage par zéro du courant du premier commutateur à thyristor (T1) pour le moment, et commander simultanément le second commutateur à thyristor (T2) pour qu'il soit activé ; et
dans le cas où le train (L) se déplace de la section neutre (A0) jusque dans le second bras d'alimentation électrique (A2) via le second sectionneur (S2), commander le second commutateur à thyristor (T2) pour qu'il soit désactivé.

6. Procédé de passage automatique de phase divisée pour les poteaux de sections de chemin de fer électrifié selon la revendication 5,
**caractérisé en ce que** la première résistance (R1) et la seconde résistance (R2) ont une tension nominale atteignant 27,5 kV à la terre et ont une tension supérieure ou égale à 10 kV à deux extrémités, avec une valeur de résistance supérieure ou égale à 500 Ω.

7. Procédé de passage automatique de phase divisée pour les poteaux de sections de chemin de fer électrifié selon la revendication 5 ou 6, **caractérisé en ce qu'**il comprend en outre les étapes suivantes consistant à :
dans le cas où un premier transformateur de courant (H1) et un second transformateur de courant (H2) détectent tous les deux un courant supérieur à 0, commander le premier commutateur de charge (K1) et le second commutateur de charge (K2) pour qu'ils soient désactivés, et appliquer une opération de commande à appliquer immédiatement au premier commutateur à thyristor (T1) et au second commutateur à thyristor (T2), au premier commutateur de rechange (K11) et au second commutateur de rechange (K22) respectivement,
dans lequel le premier commutateur à thyristor (T1) est connecté au premier transformateur de courant (H1) et au premier commutateur de charge (K1) en série, qui forment tous une boucle en série connectée à deux extrémités du premier sectionneur (S1), et le premier commutateur de rechange (K11) est connecté à deux extrémités du premier sectionneur (S1) en parallèle ; et
le second commutateur à thyristor (T2) est connecté au second transformateur de courant (H2) et au second commutateur de charge (K2) en série, qui forment tous une boucle en série connectée à deux extrémités du second sectionneur (S2), et le second commutateur de rechange (K22) est connecté à deux extrémités du second sectionneur (S2) en parallèle.

8. Procédé de passage automatique de phase divisée pour les poteaux de sections de chemin de fer électrifié selon la revendication 7,
**caractérisé en ce qu'**il comprend en outre l'étape consistant à :
envoyer une alarme d'erreur à un dispositif distant (YD) dans le cas où le premier transformateur de courant (H1) et le second transformateur de courant (H2) détectent tous les deux un courant supérieur à 0.
